(19) Europäisches Patentamt / European Patent Office / Office européen des brevets

(11) **EP 2 993 847 B1**

(12) **FASCICULE DE BREVET EUROPEEN**

(45) Date de publication et mention de la délivrance du brevet:
**22.05.2019 Bulletin 2019/21**

(51) Int Cl.:
***H04L 27/22*** *(2006.01)*

(21) Numéro de dépôt: **15182622.9**

(22) Date de dépôt: **27.08.2015**

(54) **PROCÉDÉ DE GÉNÉRATION D'UN BANC DE FILTRE POUR LA RÉCEPTION D'UN SIGNAL MODULÉ PAR UNE MODULATION À PHASE CONTINUE ET RÉCEPTEUR CONTENANT LE BANC DE FILTRE GÉNÉRÉ**

VERFAHREN ZUM GENERIEREN EINER FILTERBANK ZUM EMPFANG VON CPM-SIGNALEN UND ENTSPRECHENDER, DIE GENERIERTE FILTERBANK ENTHALTENDER EMPFÄNGER

METHOD FOR GENERATING A FILTER BANK FOR RECEIVING CPM SIGNALS AND A RECEIVER COMPRISING THE GENERATED FILTERBANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2014 FR 1401953**

(43) Date de publication de la demande:
**09.03.2016 Bulletin 2016/10**

(73) Titulaires:
• **THALES**
**92400 Courbevoie (FR)**
• **Centre National d'Etudes Spatiales**
**75039 Paris Cedex 01 (FR)**

(72) Inventeurs:
• **BENADDI, Tarik**
**31400 Toulouse (FR)**
• **GADAT, Benjamin**
**31100 Toulouse (FR)**

• **POULLIAT, Charly**
**31071 Toulouse Cedex (FR)**
• **BOUCHERET, Marie-Laure**
**31071 Toulouse Cedex (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**US-A1- 2007 030 926**

• **ALDO CERO ET AL: "On Reduced-Complexity Soft-Output Detection of Continuous Phase Modulations", IEEE VEHICULAR TECHNOLOGY CONFERENCE - VTC SPRING 2008, 11 mai 2008 (2008-05-11), pages 1092-1096, XP031255696, NJ, USA ISBN: 978-1-4244-1644-8**

EP 2 993 847 B1

**Description**

L'invention concerne le domaine des systèmes de communication numérique par voie radio et plus précisément les systèmes qui exploitent, pour mettre en forme le signal à émettre, une modulation à phase continue.

Dans un système de communications numérique, l'utilisation de modulations à amplitude constante, telles que des modulations à phase continue, est préférée car ces dernières permettent de maximiser la portée du signal transmis. En effet, les modulations à enveloppe constante présentent l'intérêt de permettre au signal émis d'avoir une puissance quasi constante. La continuité de la phase permet au signal d'occuper une bande passante moins importante, et l'enveloppe constante du signal permet de mieux résister aux non linéarités du canal de transmission et de permettre aux amplificateurs du système de fonctionner proche de leur point de saturation. Un signal modulé à phase continue est également désigné signal CPM de l'abbréviation anglo-saxonne « Continued Phase Modulation ».

Les propriétés avantageuses des modulations à phase continue apparaissent plus fortement lorsque l'ordre de modulation utilisé est élevé ou lorsque la longueur de la mémoire de la modulation est élevée. Cependant, cela entraine une complexité d'implémentation importante pour le récepteur.

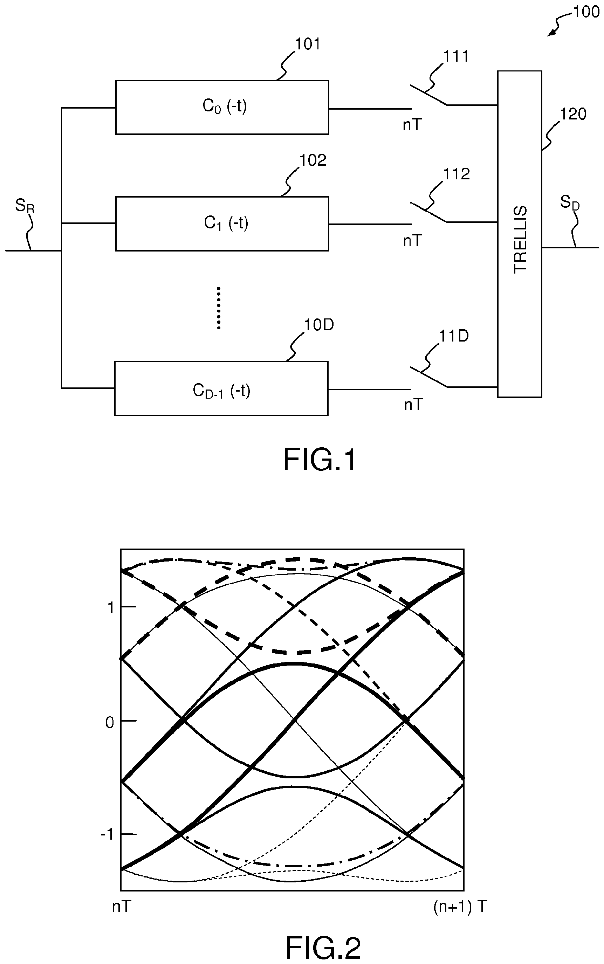

Pour pallier cet inconvénient, il est connu de mettre en oeuvre une décomposition du signal modulé à phase continue sous la forme d'une somme de signaux modulés en amplitude, chaque composante de la forme étant définie à partir des paramètres de la modulation et pondérée par un pseudo-symbole déterminé à partir des symboles à émettre. Le principe d'une telle décomposition est présenté dans l'article [1]. Selon l'enseignement de ce document, il est connu d'utiliser, pour démoduler un signal modulé à phase continue, la structure du récepteur décrit à la figure 1.

Un tel récepteur 100 comporte un banc de filtres 101,102,...10D pour filtrer le signal reçu $S_R$. Les filtres du banc sont définis chacun par une réponse temporelle $C_0(-t)...C_{D-1}(-t)$ adaptée à la décomposition sous forme de composantes modulées en amplitude selon [1]. Le récepteur 100 comporte également des échantillonneurs 111,112,...11D pour échantillonner les signaux filtrés et un démodulateur 120 qui exécute un algorithme basé sur un treillis, par exemple un algorithme de Viterbi ou un algorithme BCJR (Bahl, Cocke, Jelinek and Raviv) ou tout autre algorithme du même type. Le démodulateur 120 détermine, à partir des symboles filtrés, le symbole émis le plus vraisemblable. Les états et les métriques utilisés par le treillis sont développés dans le document [2].

Le récepteur 100 décrit à la figure 1 présente cependant plusieurs inconvénients.

En premier lieu, les composantes de la décomposition du signal en somme de signaux modulés en amplitude ne sont pas orthogonales entre elles. Donc les filtres 101,102,...10D adaptés à ces composantes ne sont pas non plus orthogonaux ce qui engendre une interférence inter composante sur le signal démodulé $S_D$.

En second lieu, les composantes précitées ont une durée qui peut s'étaler au delà de la durée d'un symbole à émettre. Ainsi, sur chaque période symbole, les contributions de plusieurs symboles peuvent interférer, les filtres du récepteur 100 introduisent donc de l'interférence entre symboles.

En troisième lieu, les échantillons du bruit en sortie des filtres 101,102,...10D dont la durée est supérieure à la durée d'un symbole sont corrélés. Le bruit en sortie du banc de filtres ne peut donc pas être considéré comme un bruit blanc Gaussien. Les métriques de branche du treillis utilisées dans l'algorithme de Viterbi ou dans l'algorithme BCJR ne sont alors plus exactes car celles-ci sont construites sur l'hypothèse stricte d'un bruit blanc additif gaussien.

Les solutions connues permettant de résoudre les trois inconvénients précités consistent le plus souvent soit à négliger leurs effets ou à introduire dans le récepteur des solutions d'égalisation du signal et/ou des filtres blanchisseurs de bruit. L'ajout de ces solutions augmente considérablement la complexité de mise en oeuvre du récepteur.

On connait par ailleurs le document US 2007/0030926 qui décrit une méthode basée sur une décomposition dite de Rimoldi.

L'invention propose une nouvelle structure de récepteur pour démoduler un signal modulé à phase continue qui permette de résoudre les inconvénients du récepteur décrit dans le document [2]. En particulier, l'invention permet de supprimer l'interférence entre symboles à la réception d'un signal CPM.

L'invention vise à permettre la réception de signaux qui ont été émis sous la forme d'une somme de signaux modulés en amplitude tel que cela est décrit dans [1].

L'invention a pour objet un procédé de génération d'un banc de filtre pour la réception d'un signal modulé par une modulation à phase continue, ledit signal modulé pouvant être décomposé sous la forme d'une somme d'une pluralité de signaux modulés en amplitude, chaque signal modulé en amplitude pouvant être exprimé sous la forme du produit entre un pseudo-symbole complexe et une composante temporelle de forme d'onde prédéfinie en fonction des paramètres de la modulation, ledit procédé comprenant les étapes suivantes :

- Evaluer, sur une durée T égale à la durée d'un symbole, toutes les formes d'ondes possibles du signal à partir des paramètres de la modulation à phase continue et de la décomposition sous la forme d'une somme d'une pluralité de signaux modulés en amplitude, l'évaluation consistant au moins à déterminer toutes les valeurs possibles des pseudo-symboles complexes,
- Retenir toutes les formes d'ondes évaluées qui sont différentes entre elles,

- Construire un banc de filtre composé d'une pluralité de filtres dont les réponses temporelles sont égales aux formes d'ondes retenues, limitées à une durée égale à la durée d'un symbole.

Selon un aspect particulier de l'invention, l'évaluation des formes d'ondes possibles du signal est réalisée à l'aide d'une représentation des états du signal sous forme d'un treillis, en calculant, sur toutes les transitions d'une section quelconque du treillis, la valeur desdits pseudo-symboles complexes pour l'ensemble des composantes temporelles considérées, un état du treillis associé à un instant temporel d'indice n étant défini par les L symboles d'information du signal à émettre antérieurs à l'instant n et le $n{-}L$-ième pseudo-symbole associé à la première composante temporelle, L étant la longueur de la mémoire de la modulation à phase continue.

Selon un aspect particulier de l'invention, le procédé selon l'invention comprend, pour chaque transition d'une section quelconque du treillis, l'évaluation du signal calculée à partir des composantes temporelles de sa décomposition et des valeurs calculées desdits pseudo-symboles complexes.

Selon un aspect particulier de l'invention, l'évaluation des formes d'ondes possibles du signal est réalisée pour un nombre réduit de composantes dans la décomposition du signal sous la forme d'une somme d'une pluralité de signaux modulés en amplitude.

L'invention a également pour objet un procédé de réception d'un signal modulé par une modulation à phase continue, comprenant les étapes suivantes :

- Filtrer le signal par un banc de filtre déterminé en exécutant le procédé de génération d'un banc de filtre selon l'invention,
- Echantillonner les sorties du banc de filtre,
- Démoduler les symboles échantillonnés en exécutant un algorithme basé sur un treillis, du type algorithme de Viterbi ou algorithme BCJR.

L'invention a également pour objet un récepteur pour la réception d'un signal modulé par une modulation à phase continue comprenant :

- Un banc de filtre déterminé en exécutant le procédé de génération d'un banc de filtre selon l'invention,
- Un moyen pour échantillonner les sorties du banc de filtre,
- Un démodulateur configuré pour exécuter, sur les symboles échantillonnés, un algorithme basé sur un treillis, du type algorithme de Viterbi ou algorithme BCJR.

L'invention a également pour objet un programme d'ordinateur comportant des instructions pour l'exécution du procédé de génération d'un banc de filtre selon l'invention, lorsque le programme est exécuté par un processeur et un support d'enregistrement lisible par un processeur sur lequel est enregistré un programme comportant des instructions pour l'exécution du procédé de génération d'un banc de filtre selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, le synoptique d'un récepteur de signaux modulés à phase continue selon l'art antérieur,
- La figure 2, un diagramme représentant les réponses temporelles des filtres générés selon l'invention pour un exemple de modulation à phase continue d'indice h=3/4,
- La figure 3, le synoptique d'un récepteur de signaux modulés à phase continue selon l'invention,
- La figure 4, un exemple de représentation d'un treillis utilisé pour évaluer les représentations possibles du signal.

En préambule à la description de l'invention, on introduit tout d'abord un rappel sur les modulations à phase continue.

Les modulations à phase continue, dites modulations CPM (Continuous Phase Modulation) sont une famille de modulations couramment utilisée pour transmettre des données numériques notamment dans le cadre de communications sans fil. Par opposition à d'autres procédés de modulation pour lesquels la phase du signal modulé est soumise à des transitions abruptes, les modulations CPM permettent de moduler la phase des symboles transmis de façon continue.

Un signal modulé par une modulation à phase continue s'écrit sous la forme suivante

$$s(t,\underline{\alpha}) = \sqrt{\frac{2E_s}{T}}\cos(2\pi f_0 t + \theta(t,\underline{\alpha}) + \theta_0) = \mathrm{Re}[s_b(t,\underline{\alpha})\exp(j2\pi f_0 t)] \qquad (1)$$

Avec:

$$\theta(t, \underline{\alpha}) = \pi h \sum_{i=0}^{N-1} \alpha_i q(t - iT)$$

et

$$q(t) = \begin{cases} \int_0^t g(\tau)d\tau, t < L \\ 1/2, t \geq L \end{cases}$$

Es est l'énergie moyenne d'un symbole, T est la durée temporelle d'un symbole, $f_0$ est la fréquence porteuse du signal, $\theta_0$ la phase à l'origine, $\theta(t,\underline{\alpha})$ la phase du signal qui module les symboles d'informations $\alpha_i$, g(t) est une fonction de mise en forme qui peut être, par exemple, une impulsion de Dirac ou une fenêtre rectangulaire, h=k/p est l'indice de modulation et L est la longueur de la mémoire de la modulation. En pratique, la forme de la fonction q(t) est du type rectangulaire, en cosinus surélevée ou Gaussienne et la mémoire L influence la lisseur du signal.

Les symboles d'informations à émettre $\alpha_i$ sont des symboles binaires qui peuvent prendre deux états.

Le signal $s_b(t, \underline{\alpha})$ est le signal en bande de base. Selon l'enseignement du document [1], ce signal peut être représenté sous la forme d'une somme de signaux modulés en amplitude. Chaque signal modulé en amplitude est égal au produit d'une composante de forme d'onde et d'un pseudo-symbole construit à partir de l'ensemble des symboles transmis aux instants précédents. Les relations suivantes donnent la représentation du signal $s_b(t)$ en fonction des pseudo-symboles $a_{k,n}$ et des composantes $c_k(t)$.

$$s_b(t) = \sqrt{2E_s/T} \sum_{k=0}^{D-1} \sum_{n=0}^{N-1} a_{k,n} c_k(t - nT) \quad (2)$$

$$a_{k,n} = \exp(j\pi h A_{k,n})$$
$$A_{k,n} = \sum_{i=0}^{n} \alpha_i - \sum_{j=1}^{L-1} \alpha_{n-j}\beta_{k,j} \quad (3)$$

$$c_k(t) = s_0(t) \prod_{j=1}^{L-1} s_{j+L\beta_{k,j}}(t), 0 < k < K - 1 \quad (4)$$

$$s_j(t) = \frac{\sin(\psi(t + jT))}{\sin(\pi h)}$$
$$\psi(t) = \begin{cases} 2\pi h q(t), 0 < t < LT \\ \pi h - 2\pi h q(t - LT), LT < t < 2LT \\ 0, t > 2LT \end{cases} \quad (5)$$

Dans le cas de symboles d'informations à émettre $\alpha_i$ binaires, le nombre D de composantes $c_k(t)$ est au maximum égal à D= $2^{L-1}$. Le paramètre $\beta_{k,j}$ est le $j^{ème}$ bit dans la décomposition binaire de l'indice k.

Comme indiqué plus haut et sur la figure 1, une façon usuelle de démoduler un signal modulé à phase continue consiste à filtrer le signal reçu par un banc de filtres qui ont chacun comme réponse temporelle, une composante $c_k(t)$ de la décomposition du signal $s_b(t)$ en signaux modulés en amplitude. Cependant cette solution présente les inconvénients discutés précédemment.

Pour remédier à ces inconvénients, l'invention consiste à remplacer, dans le banc de filtre du récepteur 100, les réponses temporelles des filtres par de nouvelles réponses qui correspondent aux formes d'ondes que peut prendre le signal $s_b(t)$ sur une période symbole.

En effet, il est possible de montrer que durant n'importe quelle période symbole, le signal modulé $s_b(t)$ ne prend qu'un nombre fini K= p.2$^L$ de formes d'onde très structurées. Ce phénomène est illustré sur la figure 2 qui représente, sur une période symbole entre les instants nT et (n+1)T, toutes les formes possibles du signal modulé $s_b(t)$ selon une modulation à phase continue d'indice de modulation h= ¾, de fonction de mise en forme q(t) égale à la fonction cosinus surrélevé et de mémoire L = 2.

Comme le montre la figure 2, le nombre de formes d'onde que peut prendre le signal sur une durée T est limité à p.2$^L$= 16 formes d'onde possibles. Autrement dit, quelque soit les symboles $\alpha_i$ émis et quelque soit leur combinaison, le signal modulé $s_b(t)$ prendra toujours la même forme théorique, parmi les 16 formes possibles, sur chaque durée symbole.

A partir de ce constat, l'invention consiste alors à modifier le récepteur 100 de la figure 1 en utilisant des filtres de réception de réponses $\omega_k(t)$, 0≤k≤K-1 qui sont égales aux K formes d'ondes possibles du signal modulé sur une période symbole T quelconque.

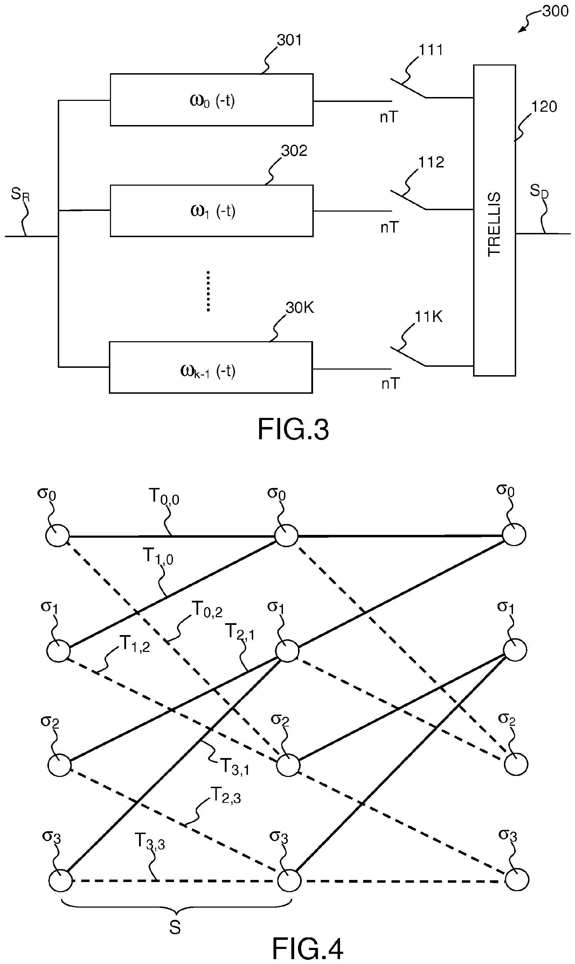

Les échantillonneurs 111,..,11K et le démodulateur 120 utilisés dans le récepteur connu décrit à la figure 1 restent inchangés dans le récepteur 300 selon l'invention tel que cela est illustré à la figure 3.

Les réponses $\omega_k(t)$ des filtres 301,302,..30K du récepteur selon l'invention peuvent être déterminées de plusieurs manières.

Une première solution consiste à déterminer toutes les formes que peut prendre le signal $s_b(t)$ en utilisant les relations (2) à (4) ci-dessus permettant de déterminer les composantes $c_k(t)$ et les pseudo-symboles $a_{k,n}$ et en faisant varier les valeurs des symboles d'information $\alpha_i$ parmi toutes les valeurs possibles.

Cette première solution présente l'inconvénient d'être couteuse en nombre d'opérations à exécuter.

Une seconde solution consiste à évaluer toutes les représentations du signal $s_b(t)$ sur une durée symbole en utilisant un algorithme basé sur une représentation du signal sous forme de treillis, le treillis utilisé étant identique à celui mis en oeuvre par un algorithme de décodage du type Viterbi ou BCJR exécuté par le démodulateur 120 du récepteur.

Le document [2] décrit l'utilisation d'un tel algorithme pour réaliser la démodulation 120 des signaux échantillonnés en sortie du banc de filtre dans le cadre d'un récepteur 100 décrit à la figure 1.

Un exemple non limitatif de treillis à quatre états est représenté à la figure 4. Une section S quelconque du treillis est définie par un ensemble d'états de départ {$\sigma_0$, $\sigma_1$, $\sigma_2$, $\sigma_3$} et d'états d'arrivée qui sont identiques.

Le nombre d'états sur une section du treillis, est égal à p.2$^{L-1}$ où p est le numérateur de l'indice de modulation h=k/p. Les états associés à deux instants consécutifs n, n+1 sont reliés entre eux par des branches représentant des transitions $T_{0,0}$,...$T_{3,3}$ d'un état à un autre.

Selon l'enseignement du document [2], un état $\sigma_i$ du treillis est défini par le vecteur {$a_{0,n-L}$, $\alpha_{n-L+1}$, ... , $\alpha_{n-2}$, $\alpha_{n-1}$}, où $\alpha_{n-L+1}$, ... , $\alpha_{n-2}$, $\alpha_{n-1}$ sont les L-1 derniers symboles antérieurs à l'instant n considéré et $\alpha_{0,n-L}$ est le pseudo-symbole à l'instant n-L associé à la composante k=0 de la décomposition en signaux modulés en amplitude selon la relation (2).

Le pseudo-symbole $a_{0,n-L}$ dépend des n-L symboles $\alpha_i$ précédemment reçus :

$$a_{0,n-L} = \exp(j\pi h \sum_{i=0}^{n-L} \alpha_i) \qquad (6)$$

A chaque section du treillis est également associé un nouveau symbole à émettre $\alpha_n$.

A partir d'un état d'entrée $\sigma_0$, on rejoint un état de sortie $\sigma_2$ (qui correspond à la situation du signal à l'instant suivant n+1) en suivant une transition $T_{0,2}$.

Pour chaque état du treillis, autrement dit pour chaque combinaison de valeurs que peut prendre le vecteur {$a_{0,n-L}$, $\alpha_{n-L+1}$, ... , $\alpha_{n-2}$, $\alpha_{n-1}$} en fonction des symboles à émettre $\alpha_{n-L+1}$, ... , $\alpha_{n-2}$, $\alpha_{n-1}$, il est possible de calculer les autres pseudo-symboles, associés à la décomposition selon la relation (2) pour les indices k strictement positifs, par l'intermédiaire des relations de récurrence suivantes :

$$A_{k,n} = A_{0,n-L} + \alpha_n + \sum_{i=1}^{L-1}(1-\beta_{k,i})\alpha_{n-i}$$
$$A_{k,n-l} = A_{0,n-L} + \alpha_{n-l} + \sum_{i=l+1}^{L-1}(1-\beta_{k,i})\alpha_{n-i} \qquad (7)$$

On détermine alors, sur une transition d'une section S quelconque du treillis, les valeurs des pseudo-symboles $a_{0,n-L}$, ...$a_{K,n-L}$.

A partir de l'évaluation des états possibles que peuvent prendre les pseudo-symboles et des relations (4) et (5) qui définissent la forme des composantes $c_k(t)$, on obtient alors une représentation possible du signal CPM.

$$s_b(t) = \sqrt{2E_s/T} \sum_{k=0}^{D-1} \sum_{l=n-L}^{n} a_{k,j} c_k(t-lT) \qquad (8)$$

Dans un second temps, on itère le procédé sur toutes les transitions de la section S choisie du treillis afin d'obtenir toutes les représentations possibles du signal $s_b(t)$ représenté par la relation (8).

Le calcul des pseudo symboles $a_{0,n-L}, ...a_{K,n-L}$ sur toutes les transitions d'une section quelconque du treillis permet d'obtenir toutes les représentations possibles du signal sur une durée symbole.

On ne conserve que les représentations qui sont différentes entre elles.

Les réponses temporelles $\omega_i(t)$ des filtres 301,...,30K du banc de filtre selon l'invention sont déterminées en limitant les représentations du signal obtenues à l'issue de l'évaluation à l'aide du treillis sur une durée symbole T

$$\omega_i(t) = s_b(t).\Pi_T(t+T/2)$$

$\Pi_T()$ est la fonction porte sur une durée T.

Sans sortir du cadre de l'invention, l'Homme du métier saura utiliser des algorithmes à base de treillis équivalents à ceux décrits ci-dessus et permettant de la même façon d'évaluer toutes les représentations possibles du signal décomposé en sommes de signaux modulés en amplitude.

Une variante de réalisation de l'invention consiste à limiter le nombre de filtres du banc de filtres en réception afin de diminuer la complexité de mise en oeuvre du récepteur. En effet, comme cela est démontré dans le document [1], les premières composantes $C_0(t)$, $C_1(t)$... de la décomposition en signaux modulés en amplitude concentrent une grande partie de l'énergie du signal alors que les composantes $C_k(t)$ pour les indices k élevés ne comportent que peu d'énergie.

Pour cette raison, lorsqu'on évalue les formes d'ondes possibles que peut prendre le signal $s_b(t)$, il est possible de limiter la décomposition à un nombre réduit de composantes, par exemple deux composantes uniquement. En limitant le nombre de composantes, le nombre de représentations identiques du signal augmente et donc le nombre de filtres obtenus à l'issu du procédé diminue.

Le procédé selon l'invention qui permet de déterminer les réponses temporelles des filtres 301,...,30K peut être mis en oeuvre en tant que programme d'ordinateur comportant des instructions pour son exécution. Le programme d'ordinateur peut être enregistré sur un support d'enregistrement lisible par un processeur.

Le récepteur 300 selon l'invention peut comprendre, pour implémenter les filtres 301,...30K, les échantillonneurs 111,112...11K et le démodulateur 120, des éléments matériels et/ou logiciels. Il peut notamment comprendre un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

L'invention présente notamment les avantages suivants. Comme les filtres utilisés en réception sont sans mémoire, le bruit en sortie des filtres est un bruit blanc Gaussien. Ainsi, il n'est plus nécessaire d'ajouter de filtre blanchisseur supplémentaire au récepteur et l'algorithme de démodulation du type Viterbi ou BCJR peut être implémenté sans approximations puisque les métriques utilisées prennent l'hypothèse d'un bruit blanc Gaussien.

En outre l'interférence entre symboles et l'interférence entre composantes est sensiblement réduite du fait de l'utilisation de filtres en réception qui sont adaptés aux différentes formes d'onde que peut prendre le signal sur une période symbole. Notamment, l'interférence entre symboles est éliminée du fait que les filtres utilisés ont un support temporel limité à une période symbole.

**Références**

[1] P Laurent, "Exact and approximate construction of digital phase modulations by superposition of amplitude modulated pulses (amp)," IEEE Transactions on Communications, vol.34, no. 2, pp. 150-160, 1986.

[2] Ghassan Kawas Kaleh, "Simple coherent receivers for partial response continuous phase modulation," IEEE Journal on Selected Areas in Communications, vol. 7, no. 9, pp. 1427-1436, 1989.

**Revendications**

1. Procédé de génération d'un banc de filtre (301,302,...30K) pour la réception d'un signal modulé par une modulation à phase continue, ledit signal modulé pouvant être décomposé sous la forme d'une somme d'une pluralité de signaux modulés en amplitude, chaque signal modulé en amplitude pouvant être exprimé sous la forme du produit entre un pseudo-symbole complexe et une composante temporelle de forme d'onde prédéfinie en fonction des paramètres de la modulation, ledit procédé comprenant les étapes suivantes :

   - Evaluer, sur une durée T égale à la durée d'un symbole, toutes les formes d'ondes possibles du signal à partir des paramètres de la modulation à phase continue et de la décomposition sous la forme d'une somme d'une pluralité de signaux modulés en amplitude, l'évaluation consistant au moins à déterminer toutes les valeurs possibles des pseudo-symboles complexes,
   - Retenir toutes les formes d'ondes évaluées qui sont différentes entre elles,
   - Construire un banc de filtre (301,302,...30K) composé d'une pluralité de filtres dont les réponses temporelles sont égales aux formes d'ondes retenues, limitées à une durée égale à la durée d'un symbole.

2. Procédé de génération d'un banc de filtre pour la réception d'un signal modulé par une modulation à phase continue selon la revendication 1 dans lequel l'évaluation des formes d'ondes possibles du signal est réalisée à l'aide d'une représentation des états du signal sous forme d'un treillis, en calculant, sur toutes les transitions $(T_{0,0},...T_{3,3})$ d'une section (S) quelconque du treillis, la valeur desdits pseudo-symboles complexes pour l'ensemble des composantes temporelles considérées, un état $(\sigma_i)$ du treillis associé à un instant temporel d'indice n étant défini par les L symboles d'information du signal à émettre antérieurs à l'instant n et le (n-L)ième pseudo-symbole associé à la première composante temporelle, L étant la longueur de la mémoire de la modulation à phase continue.

3. Procédé de génération d'un banc de filtre pour la réception d'un signal modulé par une modulation à phase continue selon la revendication 2 comprenant, pour chaque transition d'une section quelconque du treillis, l'évaluation du signal calculée à partir des composantes temporelles de sa décomposition et des valeurs calculées desdits pseudo-symboles complexes.

4. Procédé de génération d'un banc de filtre pour la réception d'un signal modulé par une modulation à phase continue selon l'une des revendications précédentes dans lequel l'évaluation des formes d'ondes possibles du signal est réalisée pour un nombre réduit de composantes dans la décomposition du signal sous la forme d'une somme d'une pluralité de signaux modulés en amplitude.

5. Procédé de réception d'un signal modulé par une modulation à phase continue, comprenant les étapes suivantes :

   - Filtrer le signal par un banc de filtre (301,302,...30K) déterminé en exécutant le procédé de génération d'un banc de filtre selon l'une des revendications précédentes,
   - Echantillonner (111,112,...11K) les sorties du banc de filtre,
   - Démoduler (120) les symboles échantillonnés en exécutant un algorithme basé sur un treillis, du type algorithme de Viterbi ou algorithme BCJR.

6. Récepteur pour la réception d'un signal modulé par une modulation à phase continue comprenant :

   - Un banc de filtre (301,302,...30K) déterminé en exécutant le procédé de génération d'un banc de filtre selon l'une des revendications 1 à 4,
   - Un moyen (111,112,...11D) pour échantillonner les sorties du banc de filtre,
   - Un démodulateur (120) configuré pour exécuter, sur les symboles échantillonnés, un algorithme basé sur un treillis, du type algorithme de Viterbi ou algorithme BCJR.

7. Programme d'ordinateur comprenant des instructions qui, lorsque le programme est exécuté par un processeur, conduisent celui-ci à mettre en oeuvre le procédé selon l'une des revendications 1 à 4.

8. Support d'enregistrement lisible par un processeur sur lequel est enregistré un programme comprenant des instructions qui, lorsque le programme est exécuté par un processeur, conduisent celui-ci à mettre en oeuvre le procédé selon l'une des revendications 1 à 4.

**Patentansprüche**

1. Verfahren zum Erzeugen einer Filterbank (301, 302, ... 30K) zum Empfangen eines durch kontinuierliche Phasenmodulation modulierten Signals, wobei das modulierte Signal in Form einer Summe einer Vielzahl amplitudenmodulierter Signale zerlegt werden kann, wobei jedes amplitudenmodulierte Signal in Form des Produkts zwischen einem komplexen Pseudosymbols und einer Zeitkomponente einer anhand der Modulationsparameter vorbestimmten Wellenform ausgedrückt werden kann, wobei das Verfahren folgende Schritte beinhaltet:

   - Bewerten, über eine Dauer T, welche der Dauer eines Symbols entspricht, aller möglichen Wellenformen des Signals anhand der Parameter der kontinuierlichen Phasenmodulation und der Zerlegung in der Form einer Summe einer Vielzahl amplitudenmodulierter Signale, wobei die Bewertung mindestens in einer Bestimmung aller möglichen Werte der komplexen Pseudosymbole besteht,
   - Zurückbehalten aller bewerteten Wellenformen, die sich voneinander unterscheiden,
   - Konstruieren einer Filterbank (301, 302, ... 30K), welche aus einer Vielzahl von Filtern besteht, deren zeitliches Ansprechverhalten den zurückbehaltenen Wellenformen entspricht, welche auf eine Dauer gleich der Dauer eines Symbols begrenzt sind.

2. Verfahren zum Erzeugen einer Filterbank zum Empfangen eines durch kontinuierliche Phasenmodulation modulierten Signals nach Anspruch 1, bei welchem die Beurteilung der möglichen Wellenformen des Signals mit Hilfe einer Darstellung der Zustände des Signals in Form eines Gitters durch Berechnen, an allen Übergängen ($T_{0,0}$, ...$T_{3,3}$) eines beliebigen Abschnittes (S) des Gitters, des Wertes der komplexen Pseudosymbole für sämtliche betrachteten Zeitkomponenten erfolgt, wobei ein Zustand ($\sigma_i$) des Gitters, welcher mit einem Zeitpunkt von Index n verbunden ist, durch die L Informationssysmbole des auszusendenden Signals, welche dem Zeitpunkt n vorausgehen und das (n-L)-te Pseudosymbol, welches mit der ersten Zeitkomponente verbunden ist, definiert wird, wobei L die Länge des Speichers der kontinuierlichen Phasenmodulation ist.

3. Verfahren zum Erzeugen einer Filterbank zum Empfangen eines durch kontinuierliche Phasenmodulation modulierten Signals nach Anspruch 2, welches für jeden Übergang eines beliebigen Abschnittes des Gitters die Bewertung des Signals beinhaltet, welche anhand der Zeitkomponenten seiner Zerlegung und der berechneten Werte der komplexen Pseudosymbole berechnet wird.

4. Verfahren zum Erzeugen einer Filterbank zum Empfangen eines durch kontinuierliche Phasenmodulation modulierten Signals nach einem der vorhergehenden Ansprüche, bei welchem die Bewertung der möglichen Wellenformen des Signals für eine reduzierte Anzahl von Komponenten in der Zerlegung des Signals in Form einer Summe einer Vielzahl von amplitudenmodulierten Signalen erfolgt.

5. Verfahren zum Empfangen eines durch kontinuierliche Phasenmodulation modulierten Signals, welches folgende Schritte beinhaltet:

   - Filtern des Signals durch eine Filterbank (301,302,...30K), welche durch Ausführen des Verfahrens zum Erzeugen einer Filterbank nach einem der vorhergehenden Ansprüche bestimmt wird,
   - Abtasten (111,112,...11K) der Ausgänge der Filterbank,
   - Demodulieren (120) der abgetasteten Symbole, durch Ausführen eines auf einem Gitter basierenden Algorithmus vom Typ Viterbi- oder BCJR-Algorithmus.

6. Empfänger zum Empfangen eines durch kontinuierliche Phasenmodulation modulierten Signals, welcher Folgendes beinhaltet:

   - eine Filterbank (301,302,...30K), welche durch Ausführen des Verfahrens zum Erzeugen einer Filterbank nach einem der Ansprüche 1 bis 4 bestimmt wird,
   - ein Mittel zum Abtasten (111,112,...11D) der Ausgänge der Filterbank,
   - einen Demodulator (120), welcher konfiguriert ist, um an den abgetasteten Symbolen einen auf einem Gitter basierenden Algorithmus vom Typ Viterbi- oder BCJR-Algorithmus auszuführen.

7. Computerprogramm, welches Anweisungen beinhaltet, die, wenn das Programm durch einen Prozessor ausgeführt wird, diesen dazu veranlassen, das Verfahren nach einem der Ansprüche 1 bis 4 umzusetzen.

8. Durch einen Prozessor lesbarer Aufzeichnungsträger, auf welchem ein Programm gespeichert ist, welches Anwei-

## EP 2 993 847 B1

sungen beinhaltet, die, wenn das Programm durch einen Prozessor ausgeführt wird, diesen dazu veranlassen, das Verfahren nach einem der Ansprüche 1 bis 4 umzusetzen.

**Claims**

1. Method for generating a filter bank (301, 302, ... 30K) for receiving a signal modulated by continuous phase modulation, said modulated signal being able to be broken down in the form of a sum of a plurality of amplitude-modulated signals, each amplitude-modulated signal being able to be expressed in the form of the product between a complex pseudo-symbol and a temporal component with a waveform predefined according to the parameters of the modulation, said method comprising the following steps:

   - evaluating, over a duration T that is equal to the duration of a symbol, all possible waveforms of the signal from the parameters of the continuous phase modulation and the breakdown in the form of a sum of a plurality of amplitude-modulated signals, the evaluation consisting at least in determining all possible values of the complex pseudo-symbols,
   - retaining all evaluated waveforms that are different from one another,
   - constructing a filter bank (301, 302, ... 30K) that is made up of a plurality of filters whose temporal responses are equal to the retained waveforms, which are limited to a duration equal to the duration of a symbol.

2. Method for generating a filter bank for receiving a signal modulated by continuous phase modulation according to claim 1, in which the possible waveforms of the signal are evaluated using a representation of the states of the signal in the form of a trellis, by computing, over all the transitions $(T_{0,0}...T_{3,3})$ of any section (S) of the trellis, the value of said complex pseudo-symbols for all of the temporal components considered, a state $(\sigma_i)$ of the trellis associated with an instant in time of index n being defined by the L information symbols of the signal to be transmitted that are prior to the instant n and the (n-L)-th pseudo-symbol associated with the first temporal component, L being the length of the memory of the continuous phase modulation.

3. Method for generating a filter bank for receiving a signal modulated by continuous phase modulation according to claim 2, comprising, for each transition of any section of the trellis, the evaluation of the signal computed from the temporal components of its breakdown and the computed values of said complex pseudo-symbols.

4. Method for generating a filter bank for receiving a signal modulated by continuous phase modulation according to one of the preceding claims, in which the possible waveforms of the signal are evaluated for a reduced number of components in the breakdown of the signal in the form of a sum of a plurality of amplitude-modulated signals.

5. Method for receiving a signal modulated by continuous phase modulation, comprising the following steps:

   - filtering the signal using a filter bank (301, 302, ... 30K) determined by performing the method for generating a filter bank according to one of the preceding claims,
   - sampling (111, 112, ... 11K) the outputs of the filter bank,
   - demodulating (120) the sampled symbols by performing an algorithm based on a trellis, of Viterbi algorithm or BCJR algorithm type.

6. Receiver for receiving a signal modulated by continuous phase modulation, comprising:

   - a filter bank (301, 302, ... 30K) determined by performing the method for generating a filter bank according to one of claims 1 to 4,
   - a means (111, 112, ... 11D) for sampling the outputs of the filter bank,
   - a demodulator (120) that is configured to perform, on the sampled symbols, an algorithm based on a trellis, of Viterbi algorithm or BCJR algorithm type.

7. Computer program comprising instructions that, when the program is executed by a processor, cause the latter to implement the method according to one of claims 1 to 4.

8. Recording medium that can be read by a processor, on which is recorded a program comprising instructions that, when the program is executed by a processor, cause the latter to implement the method according to one of claims 1 to 4.

9

FIG.1

FIG.2

FIG.3

FIG.4

## EP 2 993 847 B1

### RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20070030926 A

**Littérature non-brevet citée dans la description**

• **P LAURENT.** Exact and approximate construction of digital phase modulations by superposition of amplitude modulated pulses (amp). *IEEE Transactions on Communications,* 1986, vol. 34 (2), 150-160

• **GHASSAN KAWAS KALEH.** Simple coherent receivers for partial response continuous phase modulation. *IEEE Journal on Selected Areas in Communications,* 1989, vol. 7 (9), 1427-1436